# EUROPEAN PATENT SPECIFICATION

(11) **EP 2 388 457 B1**
(45) Date of publication and mention of the grant of the patent: **12.12.2012**
(21) Application number: 11166814.1
(22) Date of filing: 19.05.2011
(51) Int. Cl.: F02D 9/16, F02M 35/10

(54) **Throttle valve for an internal combustion engine with eccentric shutter**
Drosselklappe für eine Brennkraftmaschine mit exzentrischer Verschlussklappe
Vanne papillon pour un moteur à combustion interne comprenant un obturateur excentrique

(30) Priority: 19.05.2010 IT BO20100320
(43) Date of publication of application: 23.11.2011
(73) Proprietor: Magneti Marelli S.p.A., 20011 Corbetta (MI) (IT)
(72) Inventor: Arpert, Klaus Peter, 38531 Rotgesbuttel (DE)
(74) Representative: Jorio, Paolo

(56) References cited:
- EP-A1- 0 701 057
- DE-A1- 10 218 176
- DE-A1-102006 009 102
- DE-B3-102004 009 502
- JP-A- 2007 192 174
- JP-A- 2007 205 280
- US-A- 5 791 312
- US-A1- 2007 246 009

## Description

### TECHNICAL FIELD

The present invention relates to a throttle valve for an internal combustion engine.

### PRIOR ART

A throttle valve is normally provided in internal combustion engines which is arranged upstream of a suction manifold and adjusts the air flow which is supplied to the cylinders. A typical throttle valve currently on the market has a valve body equipped with a tubular supply conduit through which the air sucked by the internal combustion engine flows; accommodated inside the supply conduit is a throttle plate, which is splined to a rotating shaft to rotate between an open position and a closed position of the supply conduit. The rotation of the throttle plate is controlled by an actuator device normally comprising an electric motor coupled with the shaft of the throttle plate by means of a gear drive and at least one spring which pushes the shaft of the throttle plate towards the closed position (or better, towards a position of limp-home close to the closed position).

The sealing of the throttle plate in the closed position is determined by the fact that the throttle plate has exactly the same shapes and sizes as the internal section of the supply conduit so as to seal the supply conduit itself; i.e. the throttle plate has not to be smaller than the internal section of the supply conduit to ensure a good seal in the closed position and at the same time has not to be larger than the internal section of the supply conduit to avoid getting stuck against the internal wall of the supply conduit.

There is a need for the throttle plate and the supply conduit to be made with greater construction accuracy both in terms of sizes and in terms of shape to ensure the throttle plate effectively closes the supply conduit in the closed position, thus determining very low air leakages (and hence negligible by the engine control). Accordingly, there is a need to use materials and processing to make the throttle plate and the supply conduit, which allow some very low construction tolerances to be ensured and which are hence particularly costly.

Moreover, there is a need to ensure that the throttle plate does not get stuck against the internal wall of the supply conduit due to the thermal expansions determined by the sudden changes in temperature to which the throttle valve is inevitably subjected during the life thereof; accordingly, there is a need to use materials to make the throttle plate and the supply conduit, which have some identical or in any event very similar coefficients of thermal expansion.

The current trend of constructors of internal combustion engines is to downsize the swept volume (by possibly increasing the specific power by means of super charging) to reduce the consumptions of fuel, performances being the same. Downsizing the swept volume of internal combustion engines requires a corresponding reduction of the air leakages which occur when the throttle valve is closed (one same leakage has a more significant damaging effect on an internal combustion engine with a smaller swept volume with respect to an internal combustion engine with a larger swept volume). Moreover, downsizing the swept volume of the internal combustion engines requires a more accurate control of the air flow which flows through the throttle valve to small openings so as to be able to accurately adjust the rotation speed to the minimum.

Lastly, the presence of the throttle valve is in any event an obstacle to the flow of the sucked air and hence inevitably determines some losses of load which are not negligible; there is a need in any type of internal combustion engine to reduce the losses of load generated by the throttle valve as much as possible to maximize the performances when the throttle valve is completely open.

Patent application DE102006009102A1 describes a throttle valve for an internal combustion engine according to the preamble of the independent claim 1.

### DESCRIPTION OF THE INVENTION

The object of the present invention is to provide a throttle valve for an internal combustion engine, which does not have the drawbacks described above and, in particular, is easy and affordable to make.

According to the present invention, a throttle valve is provided for an internal combustion engine according to that claimed by the accompanying claims.

### BRIEF DESCRIPTION OF THE DRAWINGS

The present invention will now be described with reference to the accompanying drawings, which illustrate a non-limiting embodiment example thereof, in which:
- figures 1 and 2 show two various perspective views of a throttle valve made according to the present invention;
- figure 3 is a top view of the throttle valve in figure 1;
- figure 4 is a longitudinal sectional view according to the line IV-IV, of the throttle valve in figure 1, in which a shutter of the throttle valve is arranged in a fully closed position;
- figure 5 is a longitudinal sectional view according to the line IV-IV, of the throttle valve in figure 1, in which a shutter of the throttle valve is arranged in a partially open position;
- figure 6 is a longitudinal sectional view according to the line IV-IV, of the throttle valve in figure 1, in which a shutter of the throttle valve is arranged in a fully open position;
- figure 7 is a longitudinal sectional view according to the line VII-VII, of the throttle valve in figure 1, in which a shutter of the throttle valve is arranged in a fully closed position;
- figure 8 is a longitudinal sectional view according to the line VII-VII, of the throttle valve in figure 1, in which a shutter of the throttle valve is arranged in a partially open position;
- figure 9 is a longitudinal sectional view according to the line VII-VII, of the throttle valve in figure 1, in which a shutter of the throttle valve is arranged in a fully open position;
- figure 10 is a view on enlarged scale, of a detail in figure 7;
- figure 11 is a perspective view of a shutter of the throttle valve in figure 1; and

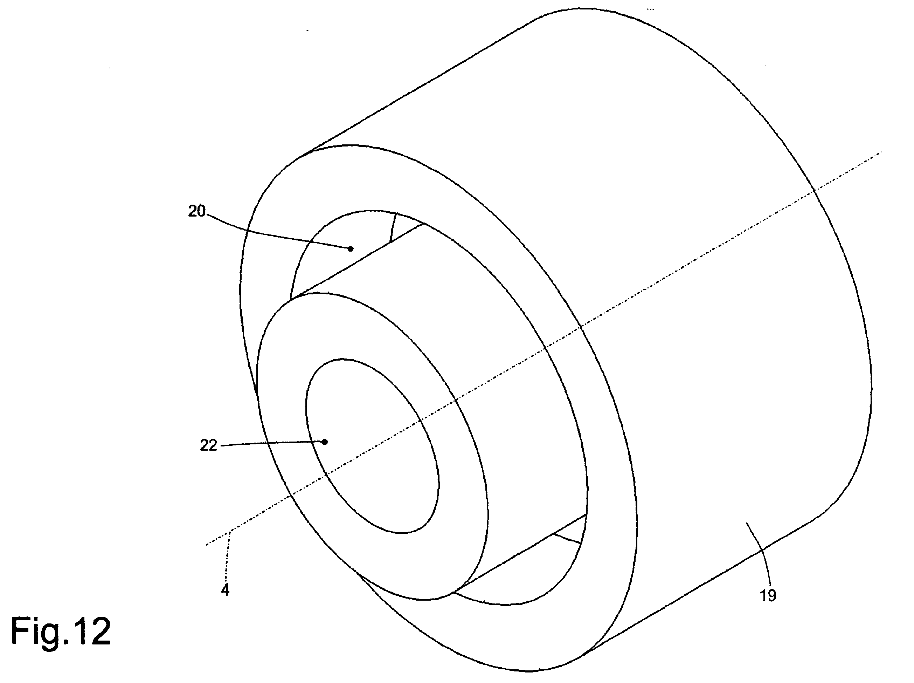

- figure 12 is a view on enlarged scale, of a detail in figure 11.

### PREFERRED EMBODIMENTS OF THE INVENTION

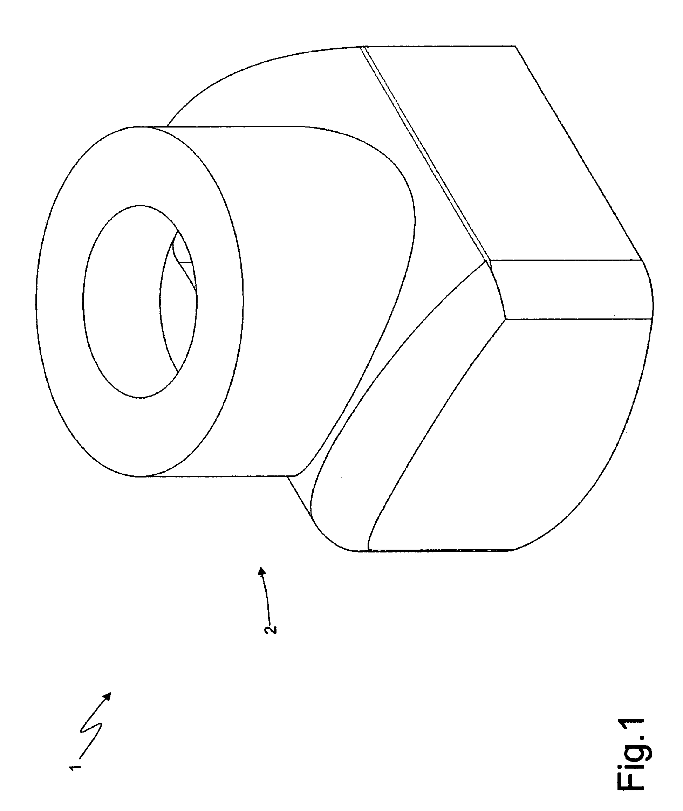

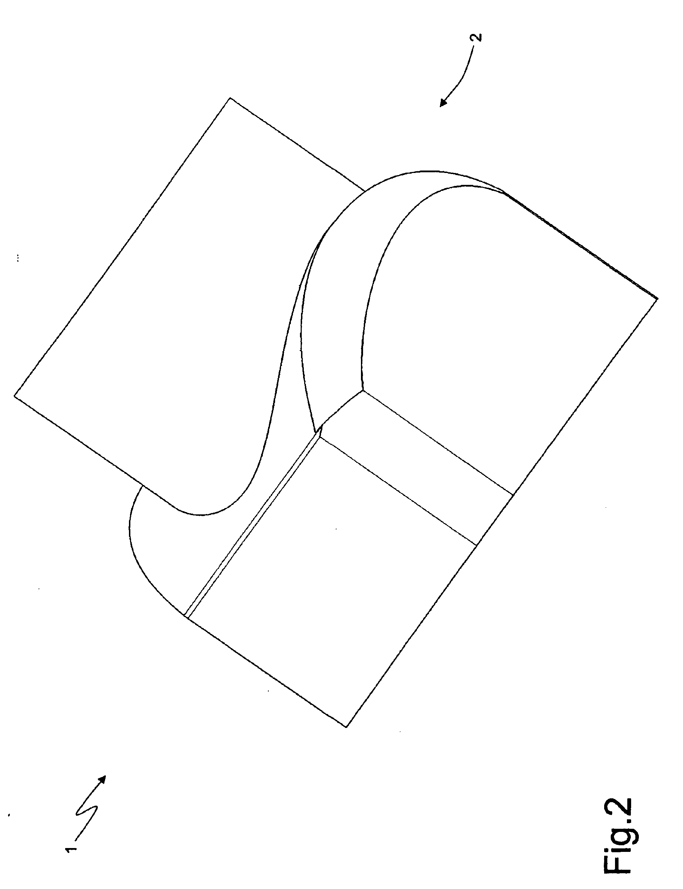

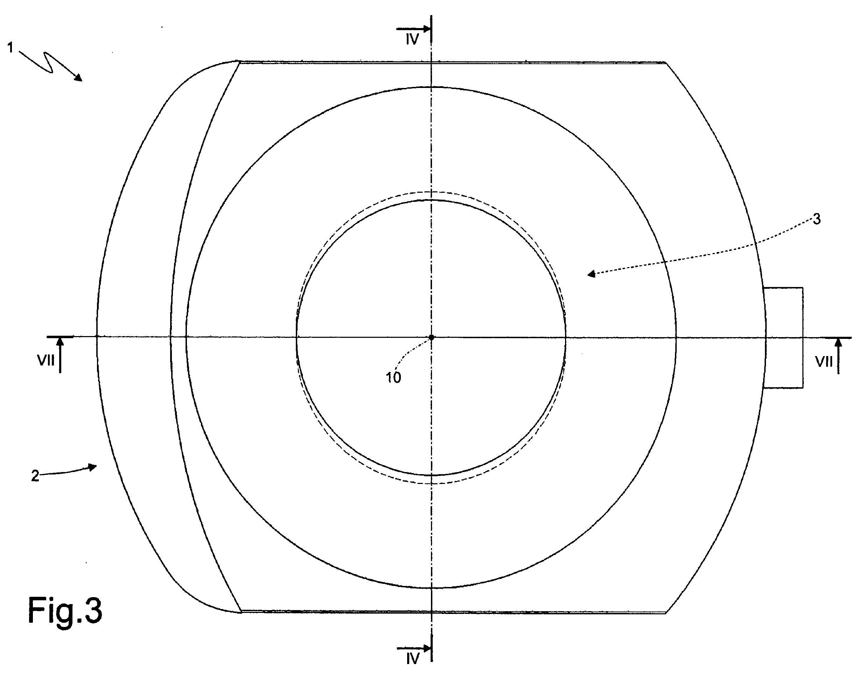

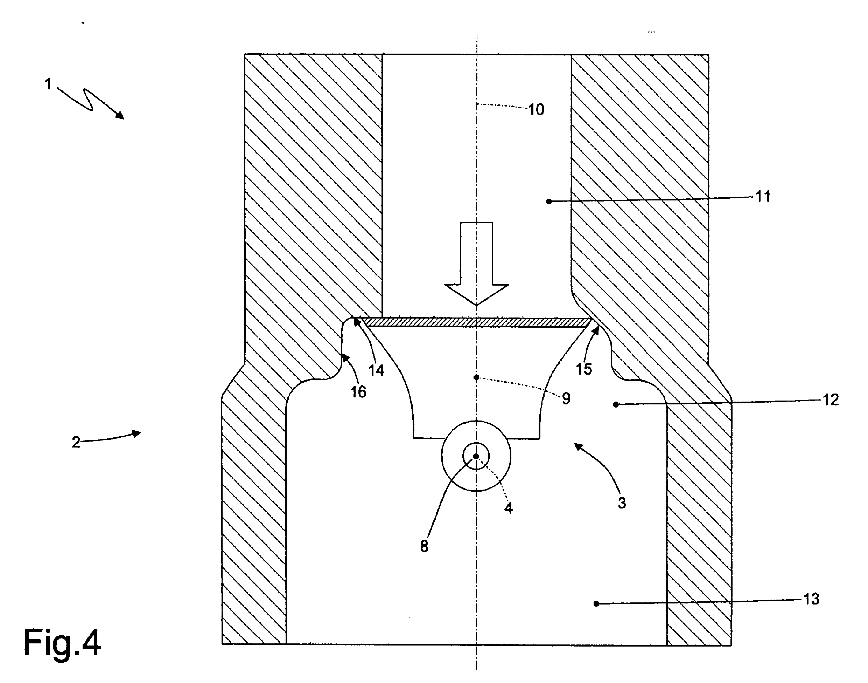

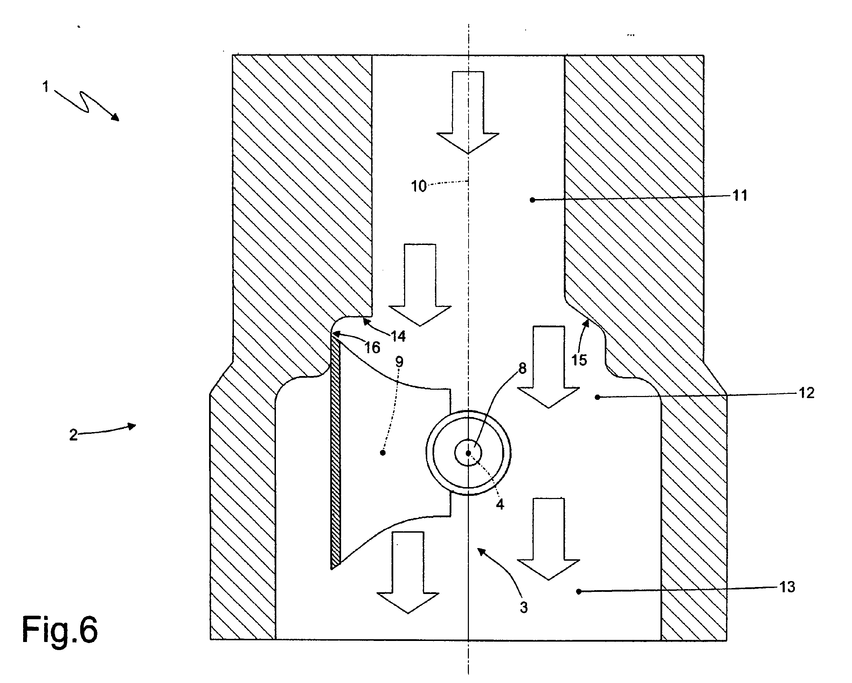

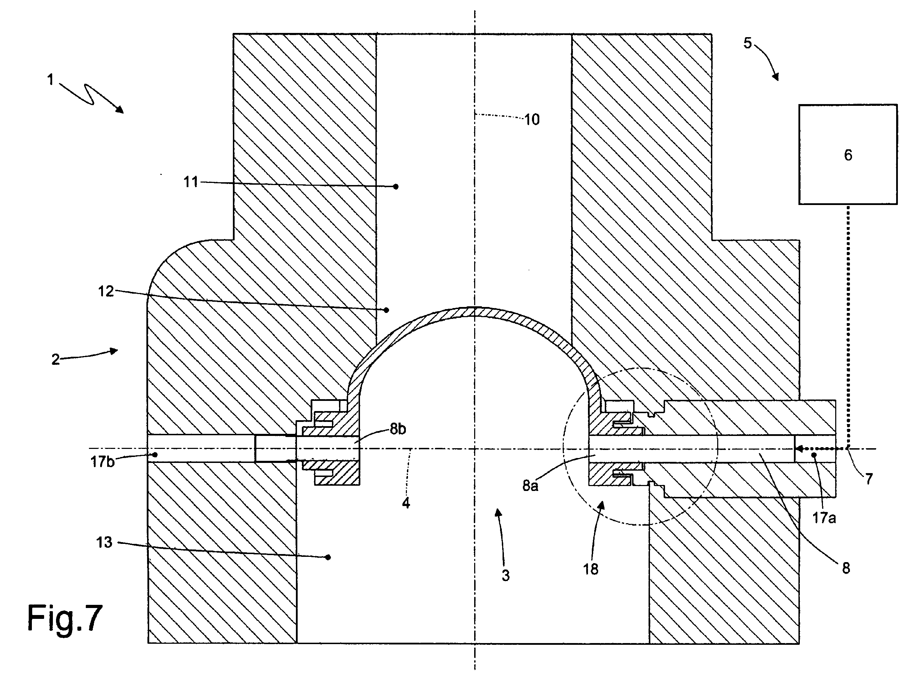

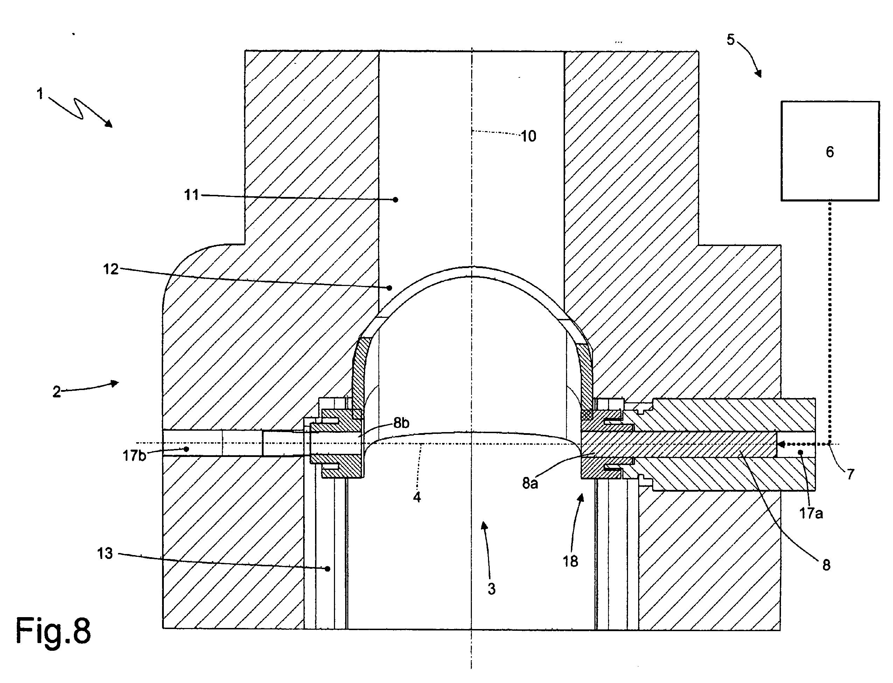

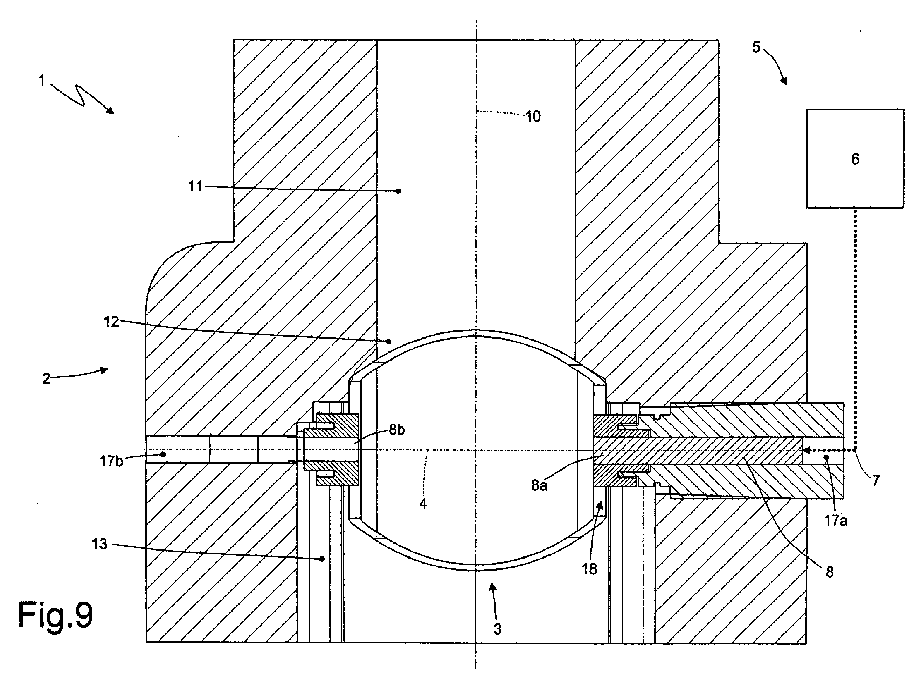

Number 1 in figures 1-3 indicates an electronically controlled throttle valve as a whole, for an internal combustion engine (not shown). The throttle valve 1 comprises a tubular supply conduit 2 having a circular section (alternatively, it could be oval or rectangular) through which the air flows sucked by the internal combustion engine, and a shutter 3 (shown in figures 4-9 and 11), which engages the supply conduit 2 and rotates about an axis of rotation 4 between a closed position (shown in figures 4 and 7) and a fully open position (shown in figures 6 and 9) of the supply conduit 2 due to the action of an actuator device 5 (diagrammatically shown in figures 7-9). In particular, the actuator device 5 comprises an electric motor 6, which by means of a mechanical gear drive 7, transfers the motion to a shaft 8 to shutter 3.

According to what is shown in figures 4-9 and 11, the axis of rotation 4 of shutter 3 is arranged eccentrically with respect to a center 9 of shutter 3 (shown in figures 4-6) and in particular, with respect to the center of gravity of shutter 3, which coincides with the geometrical center of shutter 3; moreover, the axis of rotation 4 is arranged approximately in a middle position of the supply conduit 2 and preferably at a longitudinal axis 10 of the supply conduit 2. Accordingly, the rotation of shutter 3 about the axis of rotation 4 occurs "non-symmetrically" with respect to the supply conduit 2, i.e. in the fully open position, shutter 3 is only arranged on one side of the supply conduit 2 (the left side as illustrated in figure 6 which shows the fully open position of shutter 3).

The supply conduit 2 comprises an inlet portion 11 arranged upstream of shutter 3, an intermediate portion 12 arranged at shutter 3 and having a larger cross section with respect to the inlet portion 11, and an outlet portion 13 arranged downstream from shutter 3. Preferably, the intermediate portion 12 has a progressively increasing cross section along the longitudinal axis 10 and away from the inlet portion 11. I.e., the intermediate portion 12 is arranged between the inlet portion 11 and the outlet portion 13 and, with respect to the inlet portion 11, has an increasing cross section (i.e. variable along the longitudinal axis 10) which there is a need for to allow the "non-symmetrical" rotation of shutter 3 about the axis of rotation 4, which is eccentric with respect to the center of gravity 9 of shutter 3. The intermediate portion 12 should provide an increased volume at least on the side on which shutter 3 is arranged in the fully open position of the supply conduit 2.

According to a preferred embodiment, the supply conduit 2 has a circular cross section (alternatively, it could be oval or rectangular); i.e., all the sections 11, 12 and 13 of the supply conduit 2 have a circular cross section (alternatively, it could be oval or rectangular) with a variable diameter (dimension).

Due to the "non-symmetrical" rotation of shutter 3 about the axis of rotation 4, the intermediate portion 12 also has a "non-symmetrical" shape with respect to the portions 11 and 13, as clearly shown in figures 4-6; the differences are noted in figures 4-6 in the shape of the internal profile of the intermediate portion 12 by comparing the right side and the left side.

As shown in figure 4, in the closed position, shutter 3 rests on an internal surface of the intermediate portion 12. The internal surface of the intermediate portion 12 comprises a contact area 14 which is arranged on the side of the supply conduit 2 in which shutter 3 is arranged in the fully open position, is substantially perpendicular to the longitudinal axis 10, and rests on an external surface of shutter 3 in the closed position. The internal surface of the intermediate portion 12 comprises a contact area 15 which is arranged on the side opposite to the side of the supply conduit 2 in which shutter 3 is arranged in the fully open position, is facing the contact area 14, touches an outer edge of shutter 3 in the closed position, and is shaped as a cylindrical surface centered on the axis of rotation 4 of shutter 3. The contact area 15 is touched by the outer edge of shutter 3 during the movement between the closed position and the fully open position of the supply conduit 2. The internal surface of the intermediate portion 12 comprises a contact area 16 which is arranged on the side of the supply conduit 2 in which shutter 3 is arranged in the fully open position, is parallel to the longitudinal axis 10, and rests on an external surface of shutter 3 in the fully open position.

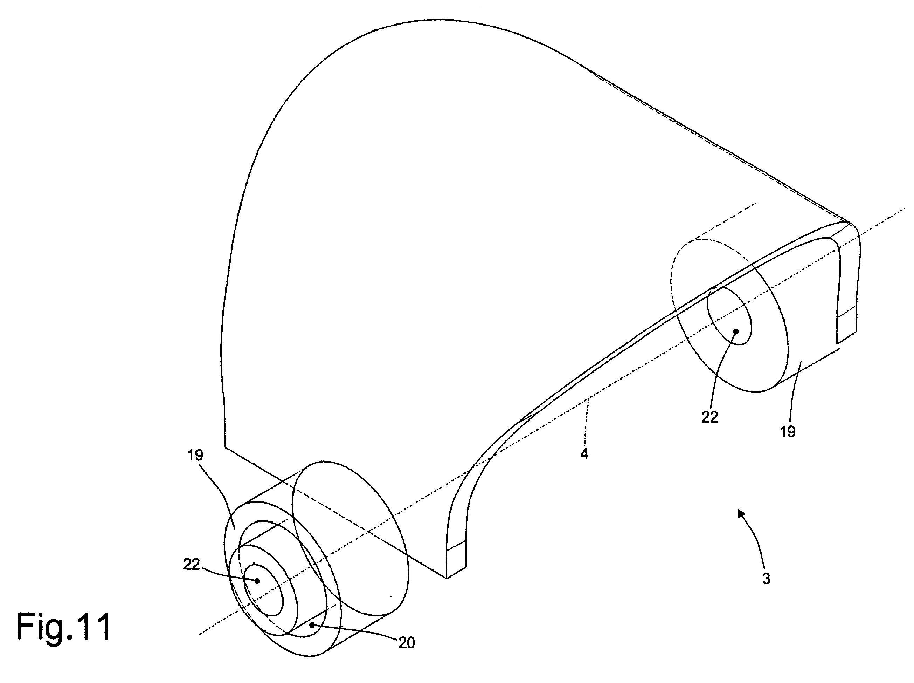

According to a preferred embodiment, which is wellillustrated in figure 11, shutter 3 has a convex saddle shape whose concavity faces an inlet portion 11 of the supply conduit 2 arranged upstream of shutter 3 in the closed position.

According to a preferred embodiment illustrated in figures 7-9, shaft 8 of shutter 3 is made with two semishafts 8a and 8b which are arranged coaxially to the axis of rotation 4 at two opposite ends of shutter 3. Each semi-shaft 8a and 8b is angularly integral with shutter 3 and is hinged to the wall of the supply conduit 2 to rotate about the axis of rotation 4; in particular, each semi-shaft 8a and 8b is inserted into a hole 17a and 17b obtained coaxially to the axis of rotation 4 through the wall of the supply conduit 2. Hole 17a passes through the wall of the supply conduit 2 so as to allow the semi-shaft 8a to be controlled by the electric motor 6 through the mechanical drive 7; in particular, the through hole 17a is obtained through the wall of the supply conduit 2 and extends between an internal opening which leads inside the supply conduit 2 and an external opening which leads outside the supply conduit 2.

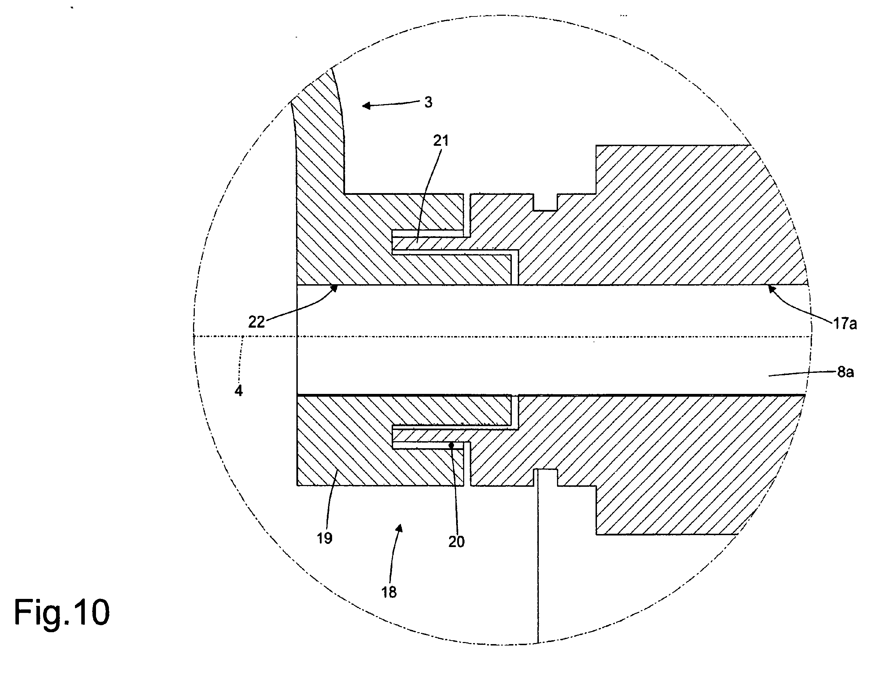

Arranged at the internal opening of each through hole 17 and about the corresponding semi-shaft 8a or 8b is a labyrinth 18 which surrounds shaft 8 itself, so as to prevent unwanted leakages of air from occurring halfway between shaft 8 when shutter 3 is in the closed position. According to what is shown in figure 10, each labyrinth 18 comprises a cylindrical body 19 which is integral with shutter 3 (hence to the corresponding semi-shaft 8a or 8b) and is provided with an annular groove 20 and a cylindrical body 21 which is integral with the wall of the supply conduit 2 (hence is rotatably mounted with respect to the cylindrical body 19), replicates in negative the shape of the annular groove 20, and is arranged within the annular groove 20 itself.

Preferably, each cylindrical body 19 comprises a middle hole 22 in which the corresponding semi-shaft 8a or 8b is inserted interlocking so that the semi-shaft 8a or 8b is angularly integral with the cylindrical body 19 and hence with shutter 3.

The above-described throttle valve 1 has several advantages.

Firstly, in the closed position, the above-described throttle valve 1 has some very low air leakages (and hence negligible by the engine control) even when the supply conduit 2 and shutter 3 are not made with a greater construction accuracy both in terms of dimensions and in terms of shape.

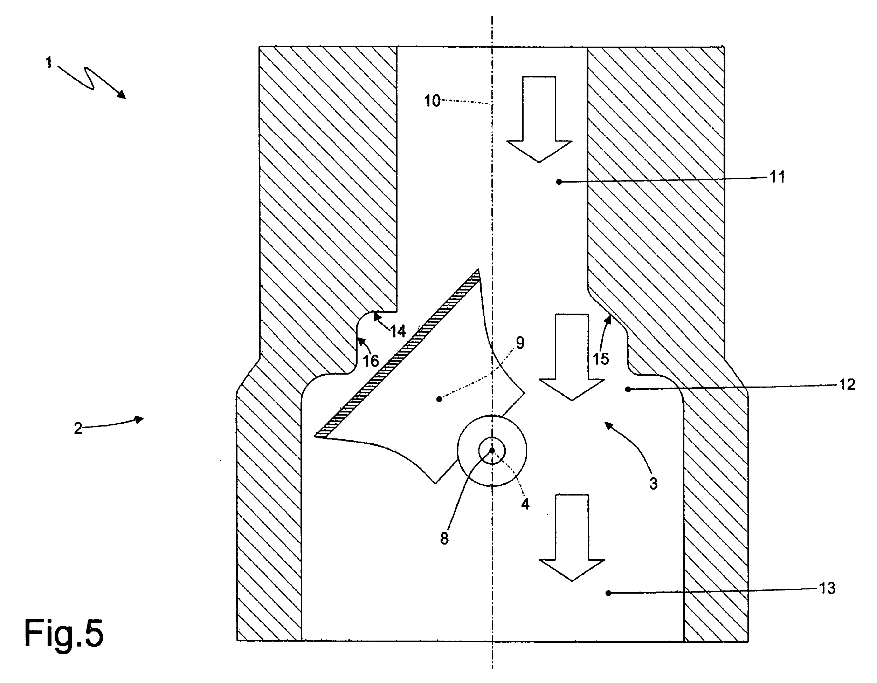

In the open positions, shutter 3 of the above-described throttle valve 1 has a decreased obstacle to the flow of sucked air. Such a result is obtained due to the fact that the sucked air substantially only passes on one side (as clearly shown in figures 5-6) of shutter 3 instead of passing on both the sides of shutter 3 (as instead occurs in traditional throttle valves equipped with a symmetrically hinged throttle plate).

The shape of shutter 3 allows any type of sticking phenomenon to be avoided in the closed position; hence shutter 3 may calmly be arranged in the fully closed position unlike what occurs in traditional throttle valves equipped with a symmetrically hinged throttle plate. This feature allows the control to be simplified of the quantity of sucked air at minimum speed, as the increasing quantity of air sucked with small angles of opening is more contained as the angle of opening increases.

The shape of shutter 3 gives shutter 3 itself increased mechanical sturdiness; accordingly, shutter 3 may also be made with plastic materials (decidedly more affordable than the metal materials both in terms of cost of the material and in terms of processing) in the case of a supercharged engine.

The above-described throttle valve 1 may be used in any internal combustion engine (indifferently operating with the Otto cycle or with the Diesel cycle); in particular, the above-described throttle valve 1 is ideally used in a super charged internal combustion engine with a small swept volume (preferably operating with the start-stop method which always provides the turning off of the engine when the vehicle is stopped).

## Claims

1. A throttle valve (1) for an internal combustion engine; the throttle valve(1) comprises:
a supply conduit (2) presenting a longitudinal axis (10) and being involved in the flow of a fluid; and
a shutter (3), which has a saddle shape, engages the supply conduit (2) and rotates around an axis (4) of rotation between a closed position and a fully open position of the supply conduit (2);
wherein the axis (4) of rotation of the shutter (3) is arranged eccentrically relatively to a center (9) of the shutter (3) so that when rotating from the closed position to a fully open position of the supply conduit (2) the shutter (3) is arranged on one side of the supply conduit (2) relatively to the longitudinal axis (10);
wherein the supply conduit (2) comprises: an inlet portion (11) arranged upstream of the shutter (3) with respect to the flow of the fluid, and an intermediate portion (12) arranged at the shutter (3) and having a larger cross section with respect to the inlet portion (11); and
wherein the shutter (3), in the closed position and in the fully open position, rests on an internal surface of the intermediate portion (12);
the throttle valve (1) is **characterized in that**:
a) the internal surface of the intermediate portion (12) comprises a first contact area (14) which is arranged on the side of the supply conduit (2) wherein the shutter (3) is arranged in the fully open position, is substantially perpendicular to the longitudinal axis (10), and only touches an external surface of the shutter (3) in the closed position;
b) the internal surface of the intermediate portion (12) comprises a second contact area (15) which is arranged on the side opposite to the side of the supply conduit (2) wherein the shutter (3) is arranged in the fully open position, is facing the first contact area (14), only touches an external edge of the shutter (3) about the closed position, and is shaped like a cylindrical surface centered on the axis of rotation (4) of the shutter (3);
c) the internal surface of the intermediate portion (12) comprises a third contact area (16) which is arranged on the side of the supply conduit (2) wherein the shutter (3) is arranged in the fully open position beside the first contact area (14), is parallel to the longitudinal axis (10), and only touches an external surface of the shutter (3) in the fully open position;
d) the external surface of the shutter (3), which is about an intermediate position between the closed position and the fully open position, is completely separated from the internal surface of the intermediate portion (12); and
e) the internal surface of the intermediate portion (12) is almost completely arranged downstream from the shutter (3) with respect to the flow of the fluid and is hence isolated from the fluid when the shutter (3) is in the closed position.

2. The throttle valve (1) according to claim 1, wherein the intermediate portion (12) has a progressively increasing cross section along the longitudinal axis (10) and away from the inlet portion (11).

3. The throttle valve (1) according to claim 1 or 2, wherein the second contact area (15) is touched by the outer edge of the shutter (3) during the movement between the closed position and the fully open position of the supply conduit (2).

4. The throttle valve (1) according to one of the claims from 1 to 3, wherein the intermediate portion (12) has an asymmetrical shape relatively to the longitudinal axis (10) of the supply conduit (2).

5. The throttle valve (1) according to one of the claims from 1 to 4, wherein the shutter (3) presents a convex shape with the concavity facing an inlet portion (11) of the supply conduit (2) placed upstream of the shutter (3) in the closed position.

6. The throttle valve (1) according to one of the claims from 1 to 5 and comprising a shaft (8) which is angularly integral to the shutter (3) to control the angular position of the shutter (3) around the axis of (4) of rotation, and escapes from the supply conduit (2) through a pass through hole (17) which is obtained through a wall of the supply conduit (2) and extends between an internal opening that leads inside the supply conduit (2) and an external opening which leads outside the supply conduit (2).

7. The throttle valve (1) according to claim 6, wherein in correspondence of the internal opening of the pass through hole (17) and around the shaft (8) a labyrinth (18) surrounding the shaft (8) is arranged.

8. The throttle valve (1) according to claim 7, wherein the labyrinth (18) comprises a first cylindrical body (19) provided with a annular groove (20) and a second cylindrical body (21) that is rotatably mounted with respect to the first cylindrical body (19), replicates in negative the shape of the annular groove (20), and is placed within the annular groove (20).

9. The throttle valve (1) according to claim 8, wherein the first cylindrical body (19) is integral to the shutter (3) and the second cylindrical body (21) is integral to a wall of the supply conduit (2).

10. The throttle Valve (1) according to claim 8 or 9, wherein the first cylindrical body (19) comprises a middle hole (22) wherein the shaft (8) is inserted interlocking.

## Patentansprüche

1. Drosselklappe (1) für eine Brennkraftmaschine; wobei die Drosselklappe (1) umfasst:
eine Versorgungsleitung (2), die eine Längsachse (10) aufweist und die am Strömen eines Fluids beteiligt ist; und
eine Klappe (3), die eine Sattelform aufweist, mit der Versorgungsleitung (2) in Eingriff ist und sich um eine Drehachse (4) zwischen einer geschlossenen Position und einer vollständig geöffneten Position der Versorgungsleitung (2) dreht;
wobei die Drehachse (4) der Klappe (3) exzentrisch in Bezug auf eine Mitte (9) der Klappe (3) angeordnet ist, so dass die Klappe (3), wenn sie sich von der geschlossenen Position zu einer vollständig geöffneten Position der Versorgungsleitung (2) dreht, an einer Seite der Versorgungsleitung (2) in Bezug auf die Längsachse (10) angeordnet ist;
wobei die Versorgungsleitung (2) umfasst: einen Einlassabschnitt (11), der von der Klappe (3) stromaufwärts in Bezug auf die Strömung des Fluids angeordnet ist, und einen Zwischenabschnitt (12), der an der Klappe (3) angeordnet ist und einen größeren Querschnitt gegenüber dem Einlassabschnitt (11) aufweist; und
wobei die Klappe (3) in der geschlossenen Position und in der vollständig geöffneten Position auf einer inneren Oberfläche des Zwischenabschnitts (12) aufliegt;
wobei die Drosselklappe (1) **dadurch gekennzeichnet ist, dass**
a) die innere Oberfläche des Zwischenabschnitts (12) einen ersten Kontaktbereich (14) umfasst, der an der Seite der Versorgungsleitung (2) angeordnet ist, in der die Klappe (3) in der vollständig geöffneten Position angeordnet ist, im Wesentlichen senkrecht zur Längsachse (10) ist und eine äußere Oberfläche der Klappe (3) nur in der geschlossenen Position berührt;
b) die innere Oberfläche des Zwischenabschnitts (12) einen zweiten Kontaktbereich (15) umfasst, der auf der Seite angeordnet ist, die der Seite der Versorgungsleitung (2) gegenüberliegt, in der die Klappe (3) in der vollständig geöffneten Position angeordnet ist, dem ersten Kontaktbereich (14) zugewandt ist, eine externe Kante der Klappe (3) nur in der Umgebung der geschlossenen Position berührt und wie eine zylindrische Oberfläche geformt ist, die auf die Drehachse (4) der Klappe (3) zentriert ist.
c) die innere Oberfläche des Zwischenabschnitts (12) einen dritten Kontaktbereich (16) umfasst, der auf der Seite der Versorgungsleitung (2) angeordnet ist, in der die Klappe (3) in der vollständig geöffneten Position neben dem ersten Kontaktbereich (14) angeordnet ist, parallel zu der Längsachse (10) ist und eine äußere Oberfläche der Klappe (3) nur in der vollständig geöffneten Position berührt;
d) die äußere Oberfläche der Klappe (3), die sich etwa in einer Zwischenposition zwischen der geschlossenen Position und der vollständig geöffneten Position befindet, vollständig von der inneren Oberfläche des Zwischenabschnitts (12) getrennt ist; und
e) die innere Oberfläche des Zwischenabschnitts (12) fast vollständig stromabwärts der Klappe (3) in Bezug auf die Strömung des Fluids angeordnet ist und somit von dem Fluid isoliert ist, wenn sich die Klappe (3) in der geschlossenen Position befindet.

2. Drosselklappe (1) nach Anspruch 1, wobei der Zwischenabschnitt (12) einen sich längs der Längsachse (10) und weg vom Einlassabschnitt (11) fortschreitend vergrößernden Querschnitt aufweist.

3. Drosselklappe (1) nach Anspruch 1 oder 2, wobei der zweite Kontaktbereich (15) durch den äußeren Rand der Klappe (3) während der Bewegung zwischen der geschlossenen Position und der vollständig geöffneten Position der Versorgungsleitung (2) berührt wird.

4. Drosselklappe (1) nach einem der Ansprüche 1 bis 3, wobei der Zwischenabschnitt (12) eine asymmetrische Form in Bezug auf die Längsachse (10) der Versorgungsleitung (2) aufweist.

5. Drosselklappe (1) nach einem der Ansprüche 1 bis 4, wobei die Klappe (3) eine konvexe Form aufweist, wobei die Konkavität einem Einlassabschnitt (11) der Versorgungsleitung (2) gegenüberliegt, der in der geschlossenen Position stromaufwärts der Klappe (3) angeordnet ist.

6. Drosselklappe (1) nach einem der Ansprüche 1 bis 5, die einen Schaft (8) umfasst, der unter einem Winkel in die Klappe integriert ist, um die Winkelposition der Klappe (3) um die Drehachse (4) zu steuern, und der aus der Versorgungsleitung (2) durch ein Durchlassloch (17) austritt, das durch eine Wand der Versorgungsleitung (2) erhalten wird und sich zwischen einer inneren Öffnung, die nach innen in die Versorgungsleitung (2) führt, und einer äußeren Öffnung, die nach außen aus der Versorgungsleitung (2) führt, erstreckt.

7. Drosselklappe (1) nach Anspruch 6, wobei entsprechend der inneren Öffnung des Durchlassloches (17) und um den Schaft (8) ein Labyrinth (18), das den Schaft umgibt, angeordnet ist.

8. Drosselklappe (1) nach Anspruch 7, wobei das Labyrinth (18) einen ersten zylindrischen Körper (19), der mit einer ringförmigen Rille (20) versehen ist, und einen zweiten zylindrischen Körper (21), der drehbar in Bezug auf den ersten zylindrischen Körper (19) montiert ist, die Form der ringförmigen Rille (20) als Negativ repliziert und innerhalb der ringförmigen Rille (20) angeordnet ist, umfasst.

9. Drosselklappe (1) nach Anspruch 8, wobei der erste zylindrische Körper (19) in die Klappe (3) integriert ist und der zweite zylindrische Körper (21) in eine Wand der Versorgungsleitung (2) integriert ist.

10. Drosselklappe (1) nach Anspruch 8 oder 9, wobei der erste zylindrische Körper (19) ein Mittelloch (22) umfasst, in das der Schaft (8) verriegelnd eingeführt ist.

## Revendications

1. Vanne d'accélérateur (1) pour un moteur à combustion interne ; la vanne d'accélérateur (1) comprenant :
un conduit d'alimentation (2) présentant un axe longitudinal (10) et étant mis en oeuvre dans l'écoulement d'un fluide ; et
un obturateur (3), qui a une forme de selle, qui vient en prise avec le conduit d'alimentation (2) et qui tourne autour d'un axe (4) de rotation entre une position fermée et une position complètement ouverte du conduit d'alimentation (2) ;
dans laquelle l'axe (4) de rotation de l'obturateur (3) est disposé de façon excentrée par rapport à un centre (9) de l'obturateur (3), de telle sorte que, lors de la rotation de la position fermée à une position complètement ouverte du conduit d'alimentation (2), l'obturateur (3) soit disposé sur un côté du conduit d'alimentation (2) par rapport à l'axe longitudinal (10) ;
dans laquelle le conduit d'alimentation (2) comprend : une partie d'entrée (11) disposée en amont de l'obturateur (3) par rapport à l'écoulement du fluide, et une partie intermédiaire (12) disposée au niveau de l'obturateur (3), et ayant une section transversale supérieure à celle de la partie d'entrée (11) ; et
dans laquelle l'obturateur (3), dans la position fermée et dans la position complètement ouverte, repose sur une surface intérieure de la partie intermédiaire (12) ;
la vanne d'accélérateur (1) étant **caractérisée en ce que** :
a) la surface intérieure de la partie intermédiaire (12) comprend une première zone de contact (14) qui est disposée sur le côté du conduit d'alimentation (2) dans lequel l'obturateur (3) est disposé dans la position complètement ouverte, est sensiblement perpendiculaire à l'axe longitudinal (10), et ne touche qu'une surface extérieure de l'obturateur (3) dans la position fermée ;
b) la surface intérieure de la partie intermédiaire (12) comprend une deuxième zone de contact (15) qui est disposée sur le côté opposé au côté du conduit d'alimentation (2) dans lequel l'obturateur (3) est disposé dans la position complètement ouverte, fait face à la première zone de contact (14), ne touche qu'un bord extérieur de l'obturateur (3) vers la position fermée, et est formée sous la forme d'une surface cylindrique centrée sur l'axe de rotation (4) de l'obturateur (3) ;
c) la surface intérieure de la partie intermédiaire (12) comprend une troisième zone de contact (16) qui est disposée sur le côté du conduit d'alimentation (2) dans lequel l'obturateur (3) est disposé dans la position complètement ouverte à côté de la première zone de contact (14), est parallèle à l'axe longitudinal (10), et ne touche qu'une surface extérieure de l'obturateur (3) dans la position complètement ouverte ;
d) la surface extérieure de l'obturateur (3), qui est vers une position intermédiaire entre la position fermée et la position complètement ouverte, est complètement séparée de la surface intérieure de la partie intermédiaire (12) ; et
e) la surface intérieure de la partie intermédiaire (12) est presque complètement disposée en aval de l'obturateur (3) par rapport à l'écoulement du fluide, et est par conséquent isolée du fluide, lorsque l'obturateur (3) est dans la position fermée.

2. Vanne d'accélérateur (1) selon la revendication 1, dans laquelle la partie intermédiaire (12) a une section transversale qui augmente progressivement le long de l'axe longitudinal (10) et en s'éloignant de la partie d'entrée (11).

3. Vanne d'accélérateur (1) selon la revendication 1 ou 2, dans laquelle la deuxième zone de contact (15) est touchée par le bord extérieur de l'obturateur (3) durant le mouvement entre la position fermée et la position complètement ouverte du conduit d'alimentation (2).

4. Vanne d'accélérateur (1) selon l'une des revendications 1 à 3, dans laquelle la partie intermédiaire (12) a une forme asymétrique par rapport à l'axe longitudinal (10) du conduit d'alimentation (2).

5. Vanne d'accélérateur (1) selon l'une des revendications 1 à 4, dans laquelle l'obturateur (3) présente une forme convexe avec la concavité faisant face à une partie d'entrée (11) du conduit d'alimentation (2) disposé en amont de l'obturateur (3) dans la position fermée.

6. Vanne d'accélérateur (1) selon l'une des revendications 1 à 5, et comprenant un arbre (8) qui est intégré de façon angulaire à l'obturateur (3), de façon à commander la position angulaire de l'obturateur (3) autour de l'axe (4) de rotation, et qui s'échappe du conduit d'alimentation (2) à travers un trou traversant de passage (17) qui est réalisé à travers une paroi du conduit d'alimentation (2) et s'étend entre une ouverture intérieure qui mène à l'intérieur du conduit d'alimentation (2) et une ouverture extérieure qui mène à l'extérieur du conduit d'alimentation (2).

7. Vanne d'accélérateur (1) selon la revendication 6, dans laquelle, en correspondance avec l'ouverture intérieure du trou traversant de passage (17) et autour de l'arbre (8), un labyrinthe (18) entourant l'arbre (8) est disposé.

8. Vanne d'accélérateur (1) selon la revendication 7, dans laquelle le labyrinthe (18) comprend un premier corps cylindrique (19) muni d'une rainure annulaire (20) et un deuxième corps cylindrique (21) qui est monté de façon à pouvoir tourner par rapport au premier corps cylindrique (19), qui reproduit en négatif la forme de la rainure annulaire (20), et qui est disposé à l'intérieur de la rainure annulaire (20).

9. Vanne d'accélérateur (1) selon la revendication 8, dans laquelle le premier corps cylindrique (19) est intégré à l'obturateur (3) et le deuxième corps cylindrique (21) est intégré à une paroi du conduit d'alimentation (2).

10. Vanne d'accélérateur (1) selon la revendication 8 ou 9, dans laquelle le premier corps cylindrique (19) comprend un trou central (22) dans lequel l'arbre (8) est inséré en verrouillage mutuel.
